# FASCICULE DE BREVET EUROPEEN

(11) **EP 0 930 493 B1**
(45) Date de publication et mention de la délivrance du brevet: **20.12.2000**
(21) Numéro de dépôt: 98390002.8
(22) Date de dépôt: 14.01.1998
(51) Int. Cl.: G01M 17/04

(54) **Banc d'essai ou de contrôle de suspensions pour véhicules à deux roues**
Prüfstand für Radaufhängungen von Zweiradfahrzeugen
Test bench for the suspension of two-wheeled vehicles

(43) Date de publication de la demande: 21.07.1999
(73) Titulaire: Fuchs, Daniel, F-34970 Lattes (FR)
(72) Inventeur: Fuchs, Daniel, F-34970 Lattes (FR)
(74) Mandataire: Ravina, Bernard

(56) Documents cités:
- EP-A- 0 483 016
- FR-A- 2 727 757
- FR-A- 2 751 079
- DATABASE WPI Section EI, Week 8518 Derwent Publications Ltd., London, GB; Class S02, AN 85-109044 XP002028466 & SU 1 116 337 A (BELORUSSIAN POLY) , 30 septembre 1984

## Description

La présente invention est du domaine des matériels utilisés pour conduire des procédures d'essai d'engins motorisés et concerne plus particulièrement un banc de contrôle de l'état des suspensions d'un véhicule à deux roues, du type de ceux dont l'écartement entre les roues est variable sous l'effet de sollicitations mécaniques, de tels véhicules pouvant être des motocyclettes, l'essai étant basé sur l'application d'un effort sur l'une au moins des deux roues du véhicule, et dans la mesure de la réaction des suspensions à cet effort appliqué, connu ou mesuré, ainsi qu'à l'action antagoniste engendrée par ledit effort sur l'autre roue.

On connaît du SU-A-1 116 337, un dispositif pour tester les suspensions d'une motocyclette. Ce dispositif comprend un rouleau moteur sur lequel repose la roue arriére de la motocyclette. Parallèlement à son axe de rotation, le rouleau moteur comporte des saillies.

On connaît également du EP-A-483 016, un procédé et un dispositif de contrôle de l'efficacité d'une suspension in situ. Les roues dont on teste les suspensions sont entraînées en oscillation verticale à l'aide d'un plateau d'entraînement. Le test est opéré par la mesure du déphasage entre les déplacements du plateau et les déplacements relatifs des roues par rapport à la carrosserie.

On connaît du FR-A-2 727 757 un banc d'essai pour motocyclette. Ce banc d'essai ne comporte pas de moyen pour tester les suspensions.

Il est préalablement précisé que par véhicule étalon, il faut entendre un véhicule qui présente des caractéristiques techniques identiques à celles du véhicule testé ou qui présente des caractéristiques suffisamment voisines pour être utilisé en tant que modèle. En entend également par véhicule étalon, un véhiculc hypothétique dont les valeurs étalons peuvent provenir de plusieurs véhicules considérés comme proches, sous forme de moyenne entre les valeurs mesurées sur ces véhicules, ou en prenant la valeur la plus représentative.

Les suspensions de véhicules comportent de façon schématique un système à ressort associé avec un amortisseur à fluide. Elles sont classiquement caractérisées par :
- leur déformation sous l'effet d'une charge statique constante,
- leur déplacement, sous l'effet d'une impulsion dynamique brève, représentative d'un choc ou d'une variation dans l'état de surface de la route,
- enfin par leur temps de retour à une position d'équilibre après réponse à une impulsion brève.

Au cours de la vie d'une suspension, le temps de retour à une position d'équilibre stable augmente, la faculté d'amortissement allant en diminuant. Cet élément caractérisant la suspension peut être déterminé par l'observation soit de la déformation d'une suspension en réponse à une série de charges connues, soit de l'évolution de la réponse de la suspension en fonction du temps, après application d'une impulsion brève.

Dans la situation actuelle, les bancs de mesure de suspension existant pour les véhicules à quatre roues, sont classiquement basés sur l'application d'un effort vertical au véhicule, sous la forme d'une impulsion brève, et l'observation de la réponse des amortisseurs du véhicule, soit mesurant le déplacement vertical du véhicule dans le temps, soit le plus souvent en mesurant l'évolution de la force verticale appliquée par le véhicule sur ses points d'appui, en réponse à l'impulsion reçue, caractéristique de la souplesse ou de la faculté d'amortissement des suspensions et donc de leur état.

Des bancs de mesure de puissance ou de pollution de véhicules à deux roues sont par ailleurs connus. Ils comprennent généralement un rouleau horizontal monté en rotation dans deux paliers de guidage, sur lequel prend appui la roue motrice de la motocyclette. Par ailleurs est prévu un dispositif de blocage de la roue avant, par lequel la motocyclette est maintenue en position sur le banc d'essai. Au rouleau peut être associé un dispositif de mesure de couple fourni ou absorbé, ce dispositif de mesure pouvant comporter un mécanisme de frein ou un moyen moteur accouplé avec le rouleau. Outre la mesure de la puissance, les bancs d'essai pour motocyclettes peuvent comporter des moyens de contrôle de géométrie du châssis et des moyens de contrôle d'analyse des gaz d'échappement, mais aucun des bancs connus ne permet de réaliser des mesures de la qualité de chacune des suspensions, pourtant fondamentale pour des questions de sécurité sur les véhicules deux roues.

La présente invention entend donc proposer un banc de contrôle ou d'essai de la qualité des suspensions des véhicules à deux roues.

L'objet de la présente invention est donc un banc d'essai ou de contrôle pour motocyclette ou véhicule à deux roues comportant un premier élément, sur ou dans lequel prend appui l'une des roues du véhicule de façon qu'une relation de transmission d'effort puisse être établie entre ledit premier élément et ladite roue, un second élément sur lequel ou dans lequel prend appui la seconde roue de façon qu'une relation de transmission d'effort puisse être établie entre ledit deuxième élément et ladite roue, caractérisé essentiellement en ce qu'il comporte un système de contrôle de suspension comprenant :
- un ou des moyens permettant de soumettre le véhicule à deux roues à une force, à un effort variable ou à une impulsion, de valeur déterminée ou déterminable,
- un moyen de mesure ou de détermination de l'une au moins des caractéristiques du mouvement de l'un des points au moins du véhicule par rapport à une référence, sous l'effet de l'application de cet effort variable, ou impulsion, ou en réponse à cet effort variable ou impulsion appliqué,
- une base de données de comparaison des mesures effectuées sur le véhicule testé avec des valeurs venant de véhicules étalons, dont l'état est réputé connu, caractéristiques soit de suspensions en bon état, soit au contraire de suspensions présentant certains défauts de réglage ou d'efficacité.

Selon une autre caractéristique de l'invention, l'un au moins des deux éléments dans ou sur lequel repose l'une des roues est monté mobile sur un châssis selon un montage permettant un mouvement de direction et de nature connues.

Selon une autre caractéristique de l'invention, l'effort variable ou l'impulsion, est appliqué(e) sur l'une des roues et est de direction horizontale ou oblique par rapport à l'horizontale. Il va de soit que l'effort ou impulsion peut être appliqué(e) sur l'un des points du véhicule ci que cet effort peut être vertical.

Grâce à ces dispositions, il est possible de caractériser l'état des suspensions d'un véhicule à deux roues en se limitant à lui faire subir des efforts appliqués au point d'appui de l'une de ses roues sur l'élément mobile, ce qui permet d'utiliser des bancs existants de contrôle de puissance et donc de simplifier considérablement la mise en oeuvre du dispositif, en se limitant à quelques modifications ou aménagements mineurs des bancs de contrôles existants. De même, ces dispositions permettent de réaliser les mesures de qualité de suspension simultanément à la série d'essais nécessaire aux mesures de puissance ou de pollution du véhicule.

Selon un mode préféré de réalisation, l'élément mobile sur lequel repose l'une des roues, par exemple la roue arrière, est constitué par un rouleau rugueux monté en rotation sur le châssis.

Cette disposition permet d'utiliser directement les bancs d'essais les plus courants, qui comportent un rouleau permettant l'appui de la roue arrière et la transmission par adhérence du couple de la roue au rouleau ou inversement.

Selon un autre mode de réalisation, l'élément mobile sur lequel ou dans lequel repose l'une des roues, par exemple la roue arrière, est constitué par une plaque horizontale rugueuse montée en translation rectiligne horizontale sur le châssis, selon l'axe de positionnement de la motocyclette.

Selon un mode encore plus particulier de réalisation, l'une des roues du véhicule, par exemple la roue arrière, est fixée à la plaque horizontale par l'intermédiaire d'un sabot, articulé à ladite plaque.

Ce mode de réalisation permet d'éviter éventuellement le biais de mesure lié au glissement de la roue sur la plaque si elle est bloquée pour la mesure, par l'intermédiaire du frein. Le blocage par sabot évite ce glissement, risque d'erreur systématique.

Ce type de montage permet la mise en oeuvre extrêmement simple d'un dispositif de test de suspensions, par lecture directe de déplacement maximum obtenu en réponse à une impulsion transmise à la roue, et comparaison avec des mesures obtenues pour des suspensions étalons. Un tel système offre l'avantage supplémentaire de pouvoir être monté très simplement et rapidement sur le châssis d'un banc existant, sans aucune modification ni utilisation de l'ensemble de mesure normal du banc.

Selon un mode particulier de réalisation du banc d'essai de suspensions, la détermination de l'efticacité des suspensions est effectuée par lecture directe d'un repère gradué face auquel est déplacé un curseur lui-même déplacé par un doigt fixé à l'élément mobile sur lequel repose l'une des roues du véhicule, et représentatif du déplacement maximum de cet élément mobile, en réponse à une force variable ou impulsion dynamique brève, connue, appliquée à l'une au moins des deux roues, en comparaison avec des déplacements connus représentatifs de suspensions étalons, éventuellement indiqués au regard du repère gradué.

Grâce à cette disposition, un dispositif très simple de test de suspension est réalisé, ne nécessitant éventuellement pas de système de calcul sophistiqué.

Selon un autre mode de réalisation, la mesure d'efficacité des suspensions est effectuée par mesure de l'une au moins des caractéristiques du mouvement vertical du châssis du véhicule au niveau de sa suspension avant ou de sa suspension arrière ou au niveau des deux suspensions, par rapport à la position du châssis au repos, en réponse à une force déterminée ou déterminable, appliquée à l'une des roues au moins, par exemple la roue arrière, en comparaison avec les données d'une base de données de déplacements verticaux, représentatifs de suspensions et de véhicules étalons.

Selon un mode encore plus particulier de réalisation, la mesure de l'une au moins des caractéristiques du mouvement vertical du châssis, par exemple à l'avant ou à l'arrière, est effectuée par l'utilisation d'un fil fixé par une de ses extrémités au châssis du véhicule, par exemple au-dessus d'une des suspensions, et par son autre extrémité à un système de rappel, par exemple à base de ressort, ledit fil entraînant un moyen indicateur d'au moins l'amplitude maximale dans un sens et ou dans l'autre, du déplacement vertical du fil et donc du châssis du véhicule.
Selon une première variante d'exécution, le moyen indicateur est un codeur angulaire sur lequel s'enroule le fil, la mesure effectuée par le codeur étant éventuellement traduite en un signal électrique continu, par exemple de forme 0, +5 Volts.

Selon une autre variante d'exécution, le fil entraîne non plus un capteur angulaire mais un plot monté en glissement dans un glissière de guidage, dans laquelle sont montés en frottement doux de part et d'autre du plot deux curseurs. Ces curseurs sont déplaçables par le plot face à un repère gradué et indiquent par leur position face à ce repère, l'amplitude maximale de la course aller et retour du plot.

Selon un troisième mode de réalisation, la mesure d'efficacité des suspensions est effectuée par mesure du débattement des suspensions avant ou arrière, par rapport à leur longueur au repos, en réponse à une force déterminée ou déterminable, appliquée à l'une des roues au moins, cette mesure étant éventuellement traduite en un signal électrique continu, par exemple de forme 0, +5 Volts.

Selon un quatrième mode de réalisation, la mesure d'efficacité des suspensions est effectuée à partir de l'information délivrée par l'un au moins des éléments suivants : un capteur accélérométrique, un capteur de vitesse, un capteur de déplacement et de position, un capteur d'effort, monté(s) sur le châssis du véhicule et/ou sur les suspensions et/ou sur l'élément mobile et fournissant des informations continues d'effort, de position, ou de vitesse ou d'accélération de l'avant et de l'arrière du châssis et/ou des suspensions et/ou de l'élément mobile, en réponse à une force déterminée ou déterminable appliquée, à l'une des roues au moins, ces données étant comparées à celles d'une base de données représentatives de véhicules et de suspensions étalons.

Grâce à ces différents modes de réalisation, il est possible de déterminer la réponse d'une suspension donnée à une série d'efforts connus donnés, et de comparer ces mesures à des mesures de suspensions étalons, aussi bien en parfait état qu'en état dégradé, et donc de caractériser la qualité des suspensions, éventuellement sans même connaître la loi mathématique précise régissant le comportement des suspensions, à partir du moment où l'étalonnage du banc d'essais avec un assez grand nombre de suspensions, soit en parfait état soit comportant des défauts connus et quantifiés, a été réalisé.

Selon un premier mode préféré de réalisation, la force appliquée, par exemple de façon essentiellement horizontale à l'une des roues, est créée par l'intermédiaire de l'élément mobile sur lequel ou dans lequel repose ladite roue, laquelle est bloquée ou freinée en rotation, ledit élément mobile pouvant être mû par un moteur ou soumis à une impulsion par un système mécanique, par exemple à base de ressort préalablement tendu et brusquement relâché, ou de système pneumatique, tel que vérin pneumatique ou autre.

Cette disposition permet de maîtriser parfaitement la valeur de l'effort appliqué à la roue du véhicule.

Selon un autre mode de réalisation des essais, la force appliquée de façon essentiellement horizontale à la roue motrice, en l'espèce la roue arrière, est créée par l'intermédiaire du moteur du véhicule, dans ce cas, la roue arrière du véhicule est en prise avec la boîte à vitesse.

Selon encore un autre mode particulier de réalisation de l'essai, l'organe moteur associé à l'élément mobile est d'abord activé en sorte de déplacer ledit élément et en sorte que ce dernier applique un effort sur l'une des roues du véhicule sous l'effet duquel les suspensions sont amenées à se déformer, ensuite l'organe moteur est désactivé afin que cet effort soit brusquement relâché et les suspensions brusquement libérées.

Selon un mode particulier de réalisation du banc d'essai, celui-ci comporte un système de calcul et de contrôle, programmé ou programmable, permettant de réaliser l'une ou plusieurs des fonctions suivantes, successivement ou simultanément :
- la gestion et la mise à jour régulière, par exemple par copie de fichier stocké sur support informatique type disquette ou CD-Rom ou par entrée directe de tests réalisés sur le banc particulier utilisé, de manière à réduire le biais systématique lié au banc de mesure lui-même, d'une base de données stockée en mémoire et représentative des valeurs caractérisant des suspensions étalons montées sur un ensemble de véhicules classiques du marché,
- le choix par l'opérateur parmi une liste de véhicules et de suspensions, proposés par le système de contrôle, de modèles analogues à ceux devant être testés,
- le pilotage des impulsions ou charges appliquées à l'une des roues du véhicule, par exemple par l'intermédiaire d'une carte de codage numérique/analogique comportant un nombre d'entrées compatible avec les effecteurs à piloter,
- la mesure à intervalles de temps déterminés des signaux émis par les capteurs en réponse aux forces appliquées, par exemple par l'intermédiaire d'une carte de numérisation si les capteurs transmettent un signal électrique continu de voltage représentatif de l'effort ou du déplacement mesuré, ainsi que leur stockage en mémoire temporaire ou permanente, ladite carte de numérisation comportant un nombre d'entrées/sorties compatible avec le nombre de capteurs fixés sur le banc d'essai ou le véhicule testé, mais au moins égal à deux pour tester simultanément les deux suspensions,
- le traitement des mesures stockées en mémoire de l'effort appliqué et de réponse des suspensions en vue de réduire les données acquises par les capteurs à quelques paramètres considérés représentatifs de l'état de la suspension,
- la détermination de la qualité des suspensions testées par application de critères de comparaison avec les valeurs étalons correspondant au modèle de suspension et de véhicule testé, et de leur conformité éventuelle à des critères de sécurité,
- le stockage en mémoire des résultats obtenus par un véhicule déterminé lors d'un test, permettant ainsi un suivi dans le temps des suspensions d'un même véhicule ou de l'évolution temporelle des suspensions de modèle analogue,
- l'affichage du résultat sous une forme compréhensible par l'opérateur, par exemple par des graphiques représentant la courbe de réponse des suspensions avant et arrière à une série de charges, superposée à des courbes étalons, ou le temps d'amortissement d'une impulsion ou charge en proportion du temps d'une suspension étalon, soumise à une même impulsion ou à une même charge, ou un témoin de montage correct ou incorrect de chaque suspension,
- et l'impression éventuelle des résultats sur un support du type papier.

Grâce à cette disposition, on comprend qu'un calcul beaucoup plus détaillé de la qualité de chacune des suspensions est possible, ainsi que l'affichage des résultats pour compréhension immédiate par l'opérateur sans que celui-ci ait à effectuer de calculs ou de comparaison par lui-même, autre que l'entrée initiale dans le système des caractéristiques de modèle de la motocyclette testée et de ses suspensions. La présence d'un calculateur informatique permet également d'envisager des évolutions futures avec des modes de calcul plus sophistiqués, en se limitant dans un premier temps à une comparaison simple de débattement des suspensions par exemple, et en apportant par la suite des améliorations notables au banc d'essai en changeant simplement le programme entré en mémoire de l'ordinateur.

La description qui va suivre, faite en regard des dessins annexés dans un but explicatif et nullement limitatif permet de mieux comprendre les avantages, buts et caractéristiques de l'invention.
La figure 1 représente un banc d'essai de suspension de motocyclette, vu de côté, selon un mode de réalisation utilisant un rouleau pour supporter la roue arrière de la motocyclette,
la figure 2 montre une vue partielle d'un banc d'essai comportant une plaque coulissante sur laquelle prend appui la roue arrière de la motocyclette,
   - la figure 3 est une demi-coupe selon la ligne AA de la figure 2,
   - la figure 4 montre un banc d'essai dont la plaque mobile comporte un sabot de blocage de la roue arrière,
   - la figure 5 est une vue de dessus un système de curseur,
   - la figure 6 est une coupe selon la ligne BB de la figure 5,
   - la figure 7 est une vue partielle d'un banc d'essai selon une autre forme de réalisation.

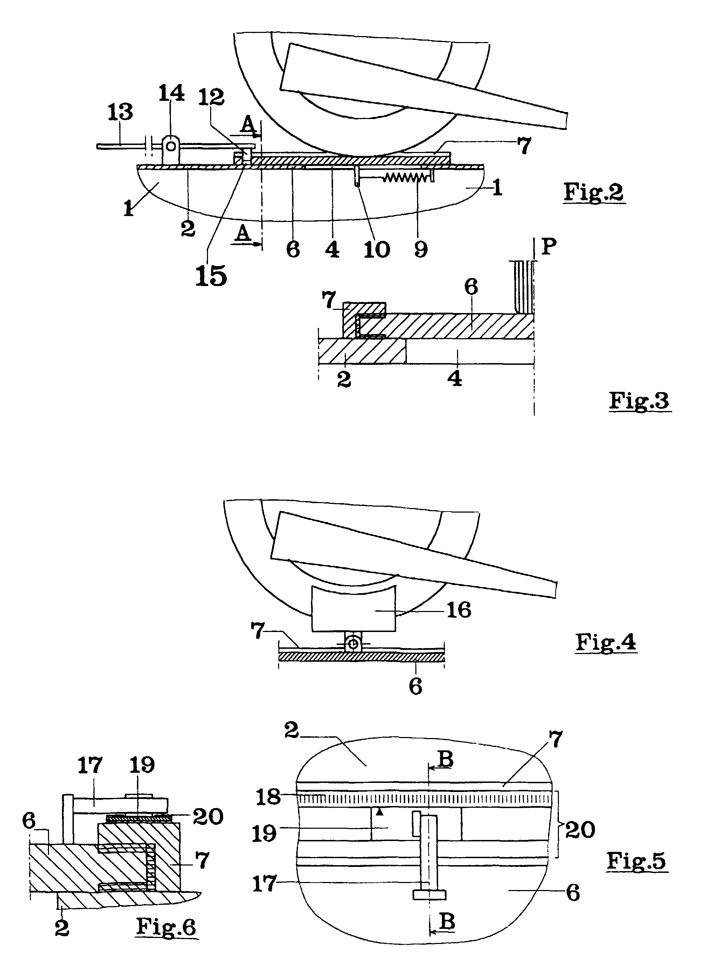

Tel que représenté, le banc d'essai selon l'invention, pour véhicule à deux roues, comprend un châssis 1, par exemple sous forme de structure métallique et de forme parallélépipédique, supportant à distance du sol une plate-forme 2, sur laquelle, suivant un plan géométrique P vertical, longitudinal au banc (fig 3), est disposée la motocyclette, laquelle peut faire l'objet de divers contrôles, par exemple des contrôles de la puissance motrice, des gaz d'échappement, de la géométrie et autres contrôles pratiqués habituellement.

Le banc est équipé dans la zone avant de la plate-forme 2, d'un système de blocage 3, coopérant en blocage avec la roue avant du véhicule. Ce système, en assurant l'immobilisation totale de la roue avant selon le plan géométrique P, assure le maintien en position verticale ci longitudinale de la motocyclette sur le banc.

Dans la zone arrière de la plate-forme est formée une ouverture quadrangulaire 4 dans laquelle est disposé un élément mobile sur lequel prend appui la roue arrière de la motocyclette. La surface de cet élément mobile recevant en appui la roue arrière a été volontairement rendue rugueuse de façon qu'une relation de transmission d'efforts par adhérence et de mouvement sans glissement soit établie entre le pneumatique de la roue arrière et le dit élément mobile. Cet élément possède une liberté de mouvement seulement sous l'effet d'un effort ou de la composante d'un effort parallèle au plan géométrique P ou contenu(e) dans ce dernier.
Cet élément mobile constitue le premier élément d'appui de roue, le second élément étant constitué par le dispositif de fixation 3.

L'élément mobile peut ctre constitué par un rouleau cylindrique 5 monté par deux tourillons d'extrémité dans deux paliers du châssis 1, qui assurent son guidage en rotation selon un axe horizontal normal au plan P. La roue arrière de la motocyclette prend appui sur la surface cylindrique du rouleau 5, cette dernière formant saillie sur la surface supérieure de la plate-forme.

Selon une autre forme de réalisation, l'élément mobile est constitué par une plaque 6 mobile horizontalement en translation rectiligne selon le plan géométrique P. Cette plaque, de forme quadrangulaire, est guidée par ses deux côtés parallèles au plan P, dans deux glissières horizontales 7, parallèles au plan P, fixées à la plate-forme du banc, par exemple, sur la paroi supérieure de ladite plate-forme de façon que la plaque horizontale 6 se développe au-dessus de l'ouverture que comporte cette dernière.

A l'élément mobile 5 ou 6 pourra être associé un organe moteur ou un organe susceptible de délivrer une impulsion mécanique.

En variante, l'élément mobile, c'est-à-dire le premier élément d'appui, sera constitué par le système de blocage de la roue avant si ce dernier est apte à être déplacé par un organe moteur de manière rectiligne, parallèlement au plan P, l'autre élément d'appui ou de réception de la roue arrière pourra être constitué soit par le rouleau du banc, ce dernier dans ce cas étant bloqué en rotation, soit par le sol, soit par d'autres moyens.

L'essai des suspensions avec un moyen qui communique à la roue une impulsion mécanique s'effectue avec blocage en rotation de cette roue. Ce blocage pourra être assuré par actionnement du frein de cette roue.

A un élément mobile constitué par un rouleau 5, pourra être associé un organe moteur 8 constitué par un moteur électrique. Ce moteur électrique sera accouplé par son arbre de sortie à l'un des tourillons dudit rouleau. Ce moteur électrique sera activé durant une période de temps suffisamment brève pour communiquer seulement une impulsion mécanique au rouleau et donc à la roue de la motocyclette. On peut également prévoir le fait que l'impulsion mécanique soit générée par action brusque sur le frein arrière de la motocyclette et relâchement sitôt après du frein, la roue arrière pouvant dans ce cas de figure être entraînée par le moteur du véhicule et reposer sur le rouleau, lequel est un élément de masse relativement importante, ou bien par ledit rouleau ce dernier étant entraîné par son moteur ou bien étant préalablement lancé par son moteur.

Pour un élément mobile constitué par une plaque 6, l'élément susceptible de délivrer une impulsion mécanique pourra être constitué par un organe élastique 9 tel un ressort à spires, fixé par une de ses extrémités à une patte 10 de la plaque 6 et par une autre de ses extrémités à une patte 11 du châssis ou de la plate-forme, le ressort 9 se développant par son axe longitudinal parallèlement au plan longitudinal P. Pourra être associé à ce dispositif, un système de verrouillage de la plaque en position d'extension du ressort, ce système de verrouillage pouvant, par exemple, être constitué par un bec 12 monté en extrémité d'un levier 13 articulé dans une chape 14 fixée à la plate-forme 2 en arrière de l'ouverture 4. Ce bec 12, sous l'effet de l'action d'un organe élastique de rappel associé au levier, viendra se disposer dans un logement 15 prévu dans la plaque 6 afin de maintenir cette dernière en position arrière de recul, selon laquelle le ressort 9 à spires est tendu. Par action sur le levier 13, le bec 12 sera dégagé du logement 15 ce qui libérera la plaque. Cette dernière, sous l'effet de la sollicitation mécanique du ressort 9 qui tend à la ramener à l'avant, communiquera à la roue arrière de la motocyclette une impulsion horizontale. En remplacement du ressort, pourra être prévu un organe moteur tel un vérin pneumatique double ou simple effet piloté par tout moyen approprié.

De façon à écarter tout risque de glissement, la roue arrière de la motocyclette pourra être montée en fixation dans un sabot 16 lié par une articulation, selon un axe perpendiculaire au plan P, à la surface supérieure de la plaque mobile 6.

Selon une version simplifiée du banc, à l'élément mobile est fixé un doigt 17 lequel, au cours de la première course aller ou retour, vient déplacer, par poussée, face à un repère gradué 18, au moins un curseur 19 monté à frottement doux sur un support de guidage 20 approprié. On pourra prévoir deux curseurs 19 disposés de part et d'autre du doigt 19. Le coefficient de frottement de chaque curseur dans la glissière est suffisant pour arrêter le mouvement dudit curseur lorsque l'effort de poussée exercé par le doigt, disparaît.

Cette disposition est propre à indiquer la valeur de l'amplitude de la première course aller et/ou retour de l'élément mobile 5 ou 6 et de permettre de déterminer, par comparaison de cette valeur avec la valeur de référence, l'état de la suspension.

Dans une forme plus élaborée, pourra être prévu en remplacement du système précédent, un compteur, connu en soi, associé mécaniquement à l'élément mobile 5 ou 6 et apte à compter le nombre de courses aller et retour accomplies par ledit élément mobile autour de sa position médiane. Cette valeur sera comparée à une valeur de référence.

On a précédent décrit un système de curseur ou un compteur associé à l'élément mobile 5 ou 6 mais il va de soit que ces moyens pourront être associés à l'un quelconque des organes mécaniques externes de la motocyclette.

Selon une autre forme plus évoluée du banc selon l'invention, à l'élément mobile 5 ou 6 ou à l'un quelconque des organes mécaniques de la motocyclette est ou sont fixé(s) au moins l'un des éléments suivants : un capteur de déplacement ou de position, un capteur de vitesse, un capteur d'accélération, un capteur d'effort, chacun de ces éléments étant apte à fournir un signal électrique dont la valeur de la tension est représentative de la valeur de la caractéristique du mouvement, mesurée. A ce ou à ces capteurs sera associé un système de calcul et de contrôle 24 défini plus loin, comportant une base de temps, apte à déterminer successivement à intervalle de temps déterminés les valeurs des différentes caractéristiques du mouvement de la suspension, en réponse à l'impulsion mécanique délivrée par l'élément mobile et/ou apte à calculer à partir d'une formule mathématique connue, à intervalles de temps déterminés une valeur représentative du coefficient d'amortissement. Les différentes valeurs mesurées et/ou relevées au cours de la période d'essai seront stockées dans des mémoires appropriées et comparées ensuite par le système de calcul et de contrôle 24 à des valeurs de références stockées dans une base de données externe ou intégrée au système de calcul.

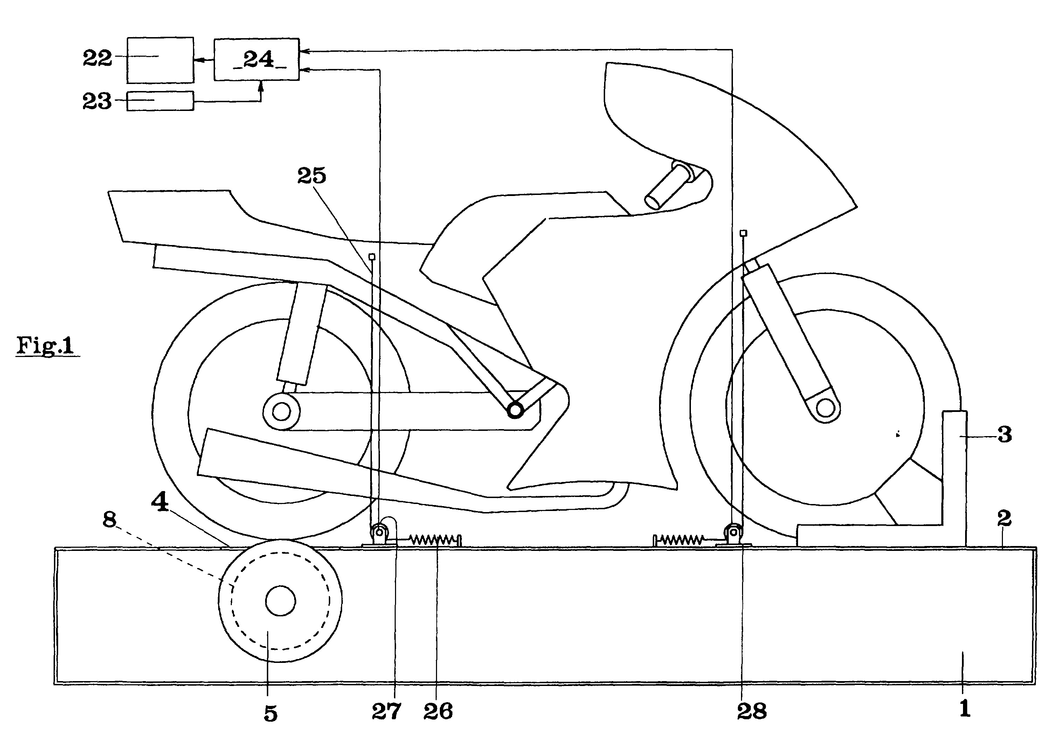

En figure 1 est montrée l'utilisation d'un seul type de capteur associé à la motocyclette. Sur cette figure, on peut voir un ensemble de capteurs angulaires 27 permettant de déterminer la position du châssis en haut de chaque suspension. Selon un mode préféré de réalisation, un fil 25 sera attaché par une de ses extrémités, par exemple en liant de la fourche avant de la motocyclette, et par son autre extrémité à un ressort de rappel 26, attaché lui-même à la plate-forme du banc d'essai. Le capteur angulaire 27, doté d'une forme de poulie sur laquelle s'enroule partiellement le fil, lequel lui transmet son mouvement, permet alors de mesurer, par la variation d'angle observée, la variation de déplacement vertical, en fonction du temps ou non, de la fourche par exemple par rapport à sa position non sollicitée. Un capteur 27 identique est monté au droit de la suspension arrière. Un système de glissière 28 fixé sur la plate-forme 2, et sur lequel peuvent coulisser les capteurs angulaires 27, permet d'assurer que les fils de mesures 25 sont bien verticaux et mesurent donc bien un déplacement vertical des suspensions. Ces capteurs 27 peuvent être soit à lecture directe, soit sous forme de potentiomètre et transmettant au système de calcul et de contrôle un signal électrique continu, par exemple compris entre 0 et +5 Volts, caractéristique de l'angle du capleur à un instant donné. Les capteurs seront classiquement alimentés en énergie par une alimentation continue de puissance, compatible avec leur consommation.

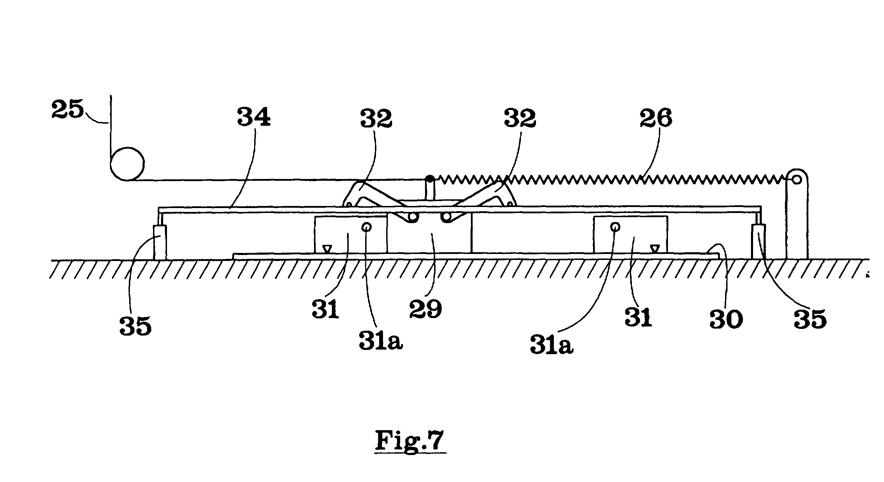

Selon une variante d'exécution, (figure 7), le fil 25, toujours fixé d'une part à un point fixe de la motocyclette et d'autre part au ressort 26, entraîne, non plus un codeur angulaire mais un plot 29 monté en glissement dans une glissière de guidage 30, dans laquelle sont montés en frottement doux de part et d'autre du plot 29, deux curseurs 31, déplaçables face à un repère gradué par l'effort de poussée exercé par ledit plot au cours de la course aller et retour de ce dernier. La position des curseurs 31 par rapport au repère gradué est indicatrice de l'amplitude maximale de la course aller et retour du plot. Le coefficient de frottement de chaque curseur 31 dans la glissière 30 est suffisant pour arrêter le mouvement dudit curseur lorsque disparaît l'effort de poussée exercé par le plot. Les curseurs 31 pourront d'abord être maintenus par rapport au plot 29 par un système de fixation temporaire actionnable dans le sens de la libération des curseurs en préalable à l'essai. A titre d'exemple purement indicatif, le système est constitué par deux crochets 32 articulés au plot 29, venant en position d'immobilisation des curseurs par rapport au plot, crocheter un doigt 31a que comporte chaque curseur 31. Ces crochets 32 sont actionnés vers une position de libération des curseurs 31, par des moyens moteurs constitués par exemple par une tringle horizontale d'actionnement 34 montée par ses extrémités sur deux moteurs électriques 35 du type électroaimant ou vérin électrique. Lors du mouvement ascendant sous l'effet de l'action des moteurs électrique, la tringle vient agir en poussée sur des doigts saillants des crochets ce qui force leur basculement dans le sens de la libération des curseurs. Il est bien évident que pourra être utilisé toute autre mécanisme moteur et tout autre système de fixation.

Au plot 29 pourra être associé tout genre de dispositif susceptible d'indiquer d'autre paramètre du mouvement tel que sa vitesse maximale, son accélération maximale et autre.

On a précédemment décrit un banc doté de moyen pour délivrer une impulsion mécanique sur la roue arrière de la motocyclette mais, selon une autre forme de réalisation, la roue arrière de la motocyclette est soumise à un effort continu d'intensité variable ou constante, déterminé ou déterminable, généré par l'entraînement de la roue en rotation par l'organe moteur de la motocyclette en accélération ou en décélération ou bien par le moteur 8 accouplé au rouleau 5. Dans ce dernier cas de figure, l'essai s'effectue la roue arrière en prise avec la boîte à vitesse. Dans l'un ou l'autre cas, l'essai peut être aussi effectué le frein arrière serré afin d'engendrer un couple résistant sur la roue, ou bien en freinant l'élément mobile sur lequel repose cette roue.

Le rouleau 5 peut être accouplé à un système de mesure de couple moteur ou résistant, connu en soi. Par la mesure de ce couple, il sera possible de déterminer l'intensité de la force entre le rouleau 5 et la roue arrière.

Comme dit précédemment le rouleau 5 peut éventuellement être entraînable en rotation par le moteur 8 par exemple électrique. La puissance de ce moteur peut être régulée par un contrôleur, et ce moteur peut être relié à l'axe du rouleau par un système de transmission débrayable.

Un capteur de vitesse de rotation du rouleau 5, est monté par exemple sur les guides supportant le rouleau.

Pour la mesure de la vitesse de rotation du rouleau 5, peut être aussi utilisée une cellule photo-électrique donnant une impulsion électrique chaque fois que le rayon lumineux qu'elle émet en direction du rouleau se trouve réfléchi par un plot réfléchissant d'une série de plots equidistants apposés contre l'un des deux flans du rouleau. Par mesure de l'intervalle de temps entre le passage de deux plots successifs devant la cellule, il sera possible de déterminer la vitesse, ainsi que la variation de cette dernière au cours du temps et donc l'accélération angulaire. Par ce biais, il sera aussi possible de déterminer la force entre la roue et le rouleau 5.

Les signaux émanant de façon continue des capteurs de déplacement et/ou d'accélération et/ou de vitesse et/ du dispositif de mesure de couples résistants ou moteurs sont traités par une carte de numérisation analogique/digital, classique, typiquement intégrée dans le système de calcul et de contrôle 24 qui sera constitué avantageusement par un moyen du type micro-ordinateur. Cette carte de numérisation, qui transforme typiquement sur commande un signal d'entrée 0, +5 Volts en valeur codée par exemple sur 8 ou 16 bits, est pilotée en intervalle de temps entre des mesures successives par le logiciel de contrôle du système, mémorisé dans le micro-ordinateur. Typiquement, des mesures seront mémorisées sur les capteurs de déplacement et d'effort appliqué à intervalles de 1/20e de seconde par exemple pendant une durée de quelques secondes à chaque sollicitation, de façon à obtenir un échantillonnage statistiquement représentatif.

Le système de calcul et contrôle 24 comportera classiquement au moins une alimentation électrique, de puissance adaptée à la consommation maximale théorique de l'ensemble des éléments en fonctionnement. Cette alimentation pourra éventuellement alimenter l'ensemble des éléments, soit en courant alternatif, soit en courant continu selon les caractéristiques des éléments, choisis.

Le système de calcul et de contrôle 24 comprend une interface utilisateur 22 basée d'une part soit sur une série de contrôleurs de niveau, type wattmètres, soit sur un écran de visualisation des valeurs des caractéristiques du mouvement et des résultats d'analyse des suspensions, et d'autre part un clavier 23 d'entrée de données.

Lors de l'utilisation du système, l'opérateur pourra s'asseoir sur la motocyclette et entrer dans le système de calcul et de contrôle 24, le modèle du véhicule ainsi que sa date de mise en circulation ou d'autres caractéristiques liées au type de suspension, à leur date d'installation etc. Il pourra également introduire des coefficients de correction pour tenir compte de la position exacte de la roue arrière sur le rouleau 5, du poids d'essence dans le réservoir ainsi que de son propre poids. Ensuite il placera le programme en mode test, et le système de calcul et de contrôle 24 pilotera alors une séné de tests des suspensions, basés par exemple sur l'application, par l'organe moteur associé à l'élément mobile 5 ou 6, de couples ou d'effort connus en intensité. L'ensemble de ces tests peut typiquement être réalisé en quelques dizaines de secondes.

Ces données sont stockées ainsi que les mesures obtenues par la carte de numérisation des capteurs de déplacement du châssis du véhicule. Le système de calcul et de contrôle traite alors les données par extraction des paramètres caractéristiques, tels que raideur de la suspension et temps de retour au repos après impulsion, et compare ces valeurs à des valeurs étalons qu'il cherche en mémoire dans une base de données préalablement stockée, et caractérisant des motocyclettes et suspensions étalons ou comportant des défauts connus.

Après ce traitement, qui prend classiquement quelques secondes au maximum, le système de calcul et de contrôle 24 affiche sur l'écran de contrôle 22 des graphiques ou paramètres génériques représentant l'état des suspensions. L'opérateur peut décider par l'intermédiaire du logiciel de test, soit de les stocker en mémoire de façon plus définitive, par exemple sur disque dur, soit de les effacer, soit de les compléter par une seconde série d'essais, enfin éventuellement de les imprimer sur papier par exemple.

La portée de la présente invention ne se limite pas aux modes de réalisation présentes mais s'étend au contraire aux perfectionnements et modifications à la portée de l'homme de l'art et du domaine des équivalences techniques. Il est par exemple envisageable de mesurer le déplacement des suspensions lorsque l'opérateur, de poids connu, s'assoit sur la motocyclette, et d'utiliser cette donnée pour compléter les autres tests en prenant en compte la masse totale de l'ensemble châssis et opérateur, supportée par les amortisseurs.

On peut envisager également que les éléments d'appui des roues du véhicule soient immobiles et soient tous deux constitués par le sol ou par toute autre surface ou moyen adapté. Dans ce cas, l'impulsion ou l'effort variable pourra être communiqué(e) au châssis du véhicule ou à la roue arrière par l'ensemble moteur du véhicule.

## Revendications

1. Banc d'essai ou de contrôle pour motocyclette ou véhicule à deux roues comportant un premier élément (5,6) sur ou dans lequel prend appui l'une des roues du véhicule de façon qu'une relation de transmission d'effort soit établie entre ledit premier élément et ladite roue, un second élément (3) sur lequel ou dans lequel prend appui la seconde roue de façon qu'une relation de transmission d'effort soit établie entre ledit deuxième élément et ladite roue, caractérisé en ce qu'il comporte un système de contrôle de suspension comprenant :
- un ou des moyens permettant de soumettre le véhicule à deux roues à une force, à un effort variable ou à une impulsion, de valeur déterminée ou déterminable,
- un moyen de mesure ou de détermination de l'une au moins des caractéristiques du mouvement de l'un des points au moins du véhicule par rapport à une référence, sous l'effet de l'application de cet effort variable, ou impulsion, ou en réponse à cet effort variable ou impulsion appliqué,
- une base de données de comparaison des mesures effectuées sur le véhicule testé avec des valeurs venant de véhicules étalons, dont l'état est réputé connu, caractéristiques soit de suspensions en bon état, soit au contraire de suspensions présentant certains défauts de réglage ou d'efficacité.

2. Banc d'essai selon la revendication 1 caractérisé en ce que l'un au moins des deux éléments dans ou sur lequel repose l'une des roues est monté mobile sur un châssis (1) selon un montage pennettant un mouvement de direction et de nature connus.

3. Banc d'essai selon la revendication 1 ou la revendication 2, caractérisé en ce que l'effort variable ou l'impulsion, est appliqué(e) sur l'une des roues et est de direction horizontale ou oblique par rapport à l'horizontale.

4. Banc d'essai selon la revendication 2, caractérisé en ce que la roue arrière repose sur l'élément mobile et que le dit élément mobile est constitué par un rouleau (5) rugueux monté en rotation sur le châssis.

5. Banc d'essai selon la revendication 2, caractérisé en ce que l'élément mobile sur lequel repose l'une des roues, est constituée par une plaque horizontale (6) rugueuse montée en translation rectiligne, horizontale, sur le châssis.

6. Banc d'essai selon la revendication 5, caractérisé en ce que la roue du véhicule est fixée à la plaque mobile (6) par l'intermédiaire d'un sabot (16) attaché à ladite plaque.

7. Banc d'essai selon l'une quelconque des revendications 2 à 6, caractérisé en ce que la détermination de l'efficacité des suspensions est effectuée par lecture directe d'un repère gradué (18) face auquel est déplacé au moins un curseur (19) lui-même déplacé par un doigt (17) fixé à l'élément mobile (5,6) sur lequel repose l'une des roues du véhicule, et représentatif du déplacement maximum de cet élément mobile, en réponse à une force variable ou impulsion dynamique brève, connue, appliquée à l'une au moins des deux roues, en comparaison avec des déplacements connus représentatifs de suspensions étalons, éventuellement indiqués au regard du repère gradué.

8. Banc d'essai selon l'une quelconque des revendications 1 à 6, caractérisé en ce que la détermination de l'efficacité des suspensions est effectuée par mesure de l'une au moins des caractéristiques du mouvement vertical du châssis du véhicule au niveau de sa suspension avant et/ou de sa suspension arrière, par rapport à la position du châssis au repos, en réponse à une force connue appliquée à l'une des roues en comparaison avec une base de données de déplacements verticaux représentatifs de suspensions et de véhicules étalons.

9. Banc d'essai selon la revendication 8, caractérisé en ce que la mesure de l'une au moins des caractéristiques du mouvement vertical du châssis, à l'avant ou à l'arrière, est effectuée par l'utilisation d'un fil (25) fixé à une de ses extrémités au châssis du véhicule et à l'autre extrémité à un système de rappel (26), ledit fil (25) entraînant un moyen indicateur d'au moins de l'amplitude maximale dans un sens et ou dans l'autre, du déplacement vertical du fil et donc du châssis du véhicule.

10. Banc d'essai selon la revendication 9, caractérisé en ce que le moyen indicateur est un codeur angulaire (27), ledit codeur étant entraîné par le fil.

11. Banc d'essai selon la revendication 9, caractérisé en ce que le moyen indicateur est constitué par un plot monté en glissement dans un glissière de guidage, dans laquelle sont montés en frottement doux de part et d'autre du plot deux curseurs, déplaçables face à un repère gradué par ledit plot au cours de la course aller et retour de ce dernier, la position des curseurs par rapport au repère gradué étant indicatrice de l'amplitude maximale de la course aller et retour du plot,

12. Banc d'essai selon l'une quelconque des revendications 1 à 6, caractérisé en ce que la détermination de l'efficacité des suspensions est effectuée par mesure directe du débattement des suspensions avant ou arrière, par rapport à leur longueur au repos, en réponse à une force connue appliquée à l'une des roues.

13. Banc d'essai selon l'une quelconque des revendications 1 à 6, caractérisé en ce que la détermination de l'efficacité des suspensions est effectuée à partir de l'information délivrée par l'un au moins des éléments suivants : un capteur accéléromètrique, un capteur de vitesse, un capteur de déplacement ou de position, un capteur d'effort, monté(s) sur le châssis du véhicules et/ou sur les suspensions et/ou sur l'élément mobile et fournissant des informations continues relatives aux valeurs des caractéristiques mesurées du mouvement dudit châssis et/ou dudit élément mobile en réponse à une force continue appliquée à l'une des roues, ces données étant comparées à une base de données représentatives de véhicules et de suspensions étalons.

14. Banc d'essai selon l'une quelconque des revendications 7 à 11, caractérisé en ce que la force appliquée à l'une des roues est créée par l'intermédiaire de l'élément mobile (5, 6) sur laquelle repose l'une des roues le dit élément mobile pouvant être mû par un organe moteur ou soumis à une impulsion par un système mécanique par exemple à base de ressort (9) tendu ou de système pneumatique.

15. Banc d'essai selon l'une quelconque des revendications 7 à 11, caractérisé en ce que la force appliquée à l'une des roues, charge variable ou impulsion dynamique brève, est créée par l'intermédiaire du moteur du véhicule, la roue arrière étant en prise avec la boîte à vitesse.

16. Banc d'essai selon l'une quelconque des revendications précédentes, caractérisé en ce qu'il comporte un système de calcul et de contrôle (24), programmé ou programmable, permettant de réaliser l'une ou plusieurs des fonctions suivantes, successivement on simultanément :
- la gestion et la mise à jour régulière, par exemple par copie de fichier stocké sur support informatique type disquette ou CD-Rom ou par durée directe de tests réalisés sur le banc particulier utilisé, de manière à réduire le biais systématique lié au banc de mesure lui-même, d'une base de données stockée en mémoire et représentative des paramètres caractérisant des suspensions étalons montées sur un ensemble de véhicules classiques du marché,
- le choix par l'opérateur parmi une liste de véhicules et de suspensions, proposés par le système de contrôle, de modèles analogues à ceux devant être testés,
- le pilotage des impulsions ou charges appliquées à l'une des roues du véhicule, par exemple par l'intermédiaire d'une carte de codage numérique/analogique comportant un nombre d'entrées compatible avec les effecteurs à piloter,
- la mesure à intervalles de temps déterminés des signaux émis par les capteurs en réponse aux forces appliquées, par exemple par l'intermédiaire d'une carte de numérisation si les capteurs transmettent un signal électrique continu de voltage représentatif de l'intensité de la caractéristique du mouvement mesurée, ainsi que leur stockage en mémoire temporaire ou permanente, ladite carte de numérisation comportant un nombre d'entrées/sorties compatible avec le nombre de capteurs fixés sur le banc d'essai ou le véhicule testé, mais au moins égal à deux pour tester simultanément les deux suspensions,
- le traitement des mesures stockées en mémoire de l'effort appliqué et de réponse des suspensions en vue de réduire les données acquises par les capteurs à quelques paramètres considérés représentatifs de l'état de la suspension,
- la détermination de la qualité des suspensions testées par application de critères de comparaison avec les valeurs étalons correspondant au modèle de suspension et de véhicule testé, et de leur conformité éventuelle à des critères de sécurité,
- le stockage en mémoire des résultats obtenus par un véhicule déterminé lors d'un test, permettant ainsi un suivi dans le temps des suspensions d'un même véhicule ou de l'évolution temporelle des suspensions de modèle analogue,
- l'affichage du résultat sous une forme compréhensible par l'opérateur, par exemple par des graphiques représentant la courbe de réponse des suspensions avant et arrière à une série de charges, superposée à des courbes étalons, ou le temps d'amortissement d'une impulsion en proportion du temps d'une suspension étalon, soumise à une même impulsion, ou un temoin de montage correct ou incorrect de chaque suspension,
- et l'impression éventuelle des résultats sur un support type papier.

## Patentansprüche

1. Prüf- oder Kontrollstand für ein Kraftrad oder Zweiradfahrzeug mit einem ersten Element (5, 6), auf oder in dem sich eines der Räder des Fahrzeugs so abstützt, daß eine Beziehung der Kraftübertragung zwischen dem ersten Element und dem Rad hergestellt ist, und mit einem zweiten Element (3), auf oder in dem sich das zweite Rad so abstützt, daß eine Beziehung der Kraftübertragung zwischen dem zweiten Element und dem Rad hergestellt ist, dadurch gekennzeichnet, daß der Prüfstand ein System zur Kontrolle der Aufhängung mit folgenden Merkmalen aufweist:
- eine Vorrichtung oder Vorrichtungen, durch welche das Zweiradfahrzeug einer Kraft, einer variablen Belastung oder einem Stoß von bestimmtem oder bestimmbaren Wert ausgesetzt werden kann,
- eine Vorrichtung zum Messen oder Bestimmen mindestens eines der Charakteristika der Bewegung von mindestens einem der Punkte des Fahrzeugs bezüglich eines Bezugspunktes unter der Wirkung der Anwendung dieser variablen Kraft oder Stoßkraft oder als Reaktion auf diese aufgebrachte variable Kraft oder Stoßkraft,
- eine Datenbank von Meßdaten, die am geprüften Fahrzeug erhalten wurden, und mit Vergleichswerten von Normalfahrzeugen, deren Zustand als bekannt angenommen wird, wobei die Charakteristika entweder solche von Aufhängungen im guten Zustand oder im Gegenteil solche von Aufhängungen mit bestimmten Mängeln der Einstellung oder Wirksamkeit sind.

2. Prüfstand nach Anspruch 1, dadurch gekennzeichnet, daß mindestens das eine der zwei Elemente, in oder auf dem das eine der Räder beruht, auf einem Chassis (1) in der Weise beweglich montiert ist, daß eine Bewegung von bekannter Richtung und Art möglich ist.

3. Prüfzustand nach Anspruch 1 oder Anspruch 2, dadurch gekennzeichnet, daß die variable Kraft oder der Stoß auf eines der Räder ausgeübt wird und horizontal oder bezüglich der Horizontalen schräg gerichtet ist.

4. Prüfstand nach Anspruch 2, dadurch gekennzeichnet, daß das Hinterrad auf dem beweglichen Element ruht und das bewegliche Element aus einer am Chassis drehbar montierten rauhen Rolle (5) besteht.

5. Prüfstand nach Anspruch 2, dadurch gekennzeichnet, daß das bewegliche Element auf dem das eine der Räder ruht, aus einer horizontalen rauhen Platte (6) besteht, die am Chassis geradlinig horizontal verschiebbar montiert ist.

6. Prüfstand nach Anspruch 5, dadurch gekennzeichnet, daß das Rad des Fahrzeugs an der beweglichen Platte (6) mittels eines an der Platte angebrachten Schuhs (16) befestigt ist.

7. Prüfstand nach einem der Ansprüche 2 bis 6, dadurch gekennzeichnet, daß die Bestimmung der Wirksamkeit der Aufhängungen durch direkte Ablesung einer graduierten Markierung (18) erfolgt, vor der sich mindestens ein Läufer (19) verschiebt, der selbst durch einen Finger (17) verschoben wird, der am beweglichen Element (5, 6) befestigt ist, auf dem das eine der Räder des Fahrzeugs ruht, und der repräsentativ für die maximale Verschiebung dieses beweglichen Elements als Reaktion auf eine variable Kraft oder einen kurzen dynamischen Stoß ist, die bekannt sind und auf mindestens das eine der zwei Räder ausgeübt werden, im Vergleich mit bekannten Verschiebungen, welche repräsentativ für Normalaufhängungen sind, die gegebenenfalls gegenüber der graduierten Markierung angezeigt sind.

8. Prüfstand nach einem der Ansprüche 1 bis 6, dadurch gekennzeichnet, daß die Bestimmung der Wirksamkeit der Aufhängungen durch Messen mindestens eines der Charakteristika der Vertikalbewegung des Fahrzeugchassis auf der Höhe seiner vorderen Aufhängung und/oder seiner hinteren Aufhängung bezüglich der Ruheposition des Chassis in Reaktion auf eine bekannte Kraft, die auf eines der Räder aufgebracht wird, und Vergleich mit einer Datenbank von vertikalen Verschiebungsdaten, die repräsentativ für normale Aufhängungen und normale Fahrzeuge sind, erfolgt.

9. Prüfstand nach Anspruch 8, dadurch gekennzeichnet, daß die Messung des mindestens einen Charakteristikums der Vertikalbewegung des Chassis vorn oder hinten unter Verwendung eines Drahtes (25) durchgeführt wird, der an einem seiner Enden am Chassis des Fahrzeugs und am anderen Ende an einem Rückstellsystem (26) befestigt ist, wobei der Draht (25) eine Anzeigevorrichtung von mindestens der maximalen Amplitude in einer oder der anderen Richtung der Vertikalverschiebung des Drahtes und damit des Fahrzeugchassis antreibt.

10. Prüfstand nach Anspruch 9, dadurch gekennzeichnet, daß die Anzeigevorrichtung ein durch den Draht angetriebener Winkelkodierer (27) ist.

11. Prüfstand nach Anspruch 9, dadurch gekennzeichnet, daß die Anzeigevorrichtung aus einem Führer besteht, der in einer Führungsschiene gleitend montiert ist, wobei in der Führungsschiene beiderseits des Führers zwei Läufer weich reibend montiert sind, die gegenüber einer graduierten Markierung durch den Führer im Verlauf von dessen Hinund Herbewegung verschiebbar sind, wobei die Position der Läufer bezüglich der graduierten Markierung eine Anzeige für die maximale Amplitude des Hin- und Rückweges des Führers liefert.

12. Prüfstand nach einem der Ansprüche 1 bis 6, dadurch gekennzeichnet, daß die Bestimmung der Wirksamkeit der Aufhängungen durch direkte Messung des Ausschlags der vorderen oder hinteren Aufhängung bezüglich ihrer Länge im Ruhezustand in Reaktion auf eine auf eines der Räder ausgeübte bekannte Kraft erfolgt.

13. Prüfstand nach einem der Ansprüche 1 bis 6, dadurch gekennzeichnet, daß die Bestimmung der Wirksamkeit der Aufhängungen ausgehend von Information erfolgt, die von wenigstens einem der folgenden Elemente geliefert wird: Einem Beschleunigungs-meßfühler, einem Geschwindigkeitsmeßfühler, einem Verschiebungs- oder Positionsmeßfühler, einem Kraftmeßfühler, der oder die am Fahrzeugchassis und/oder an den Aufhängungen und/oder am beweglichen Element montiert sind und kontinuierliche Informationen bezüglich charakteristischer Meßwerte der Bewegung des Chassis und/oder des beweglichen Elements in Reaktion auf eine auf eines der Räder ausgeübte bekannte Kraft liefern, wobei diese Daten verglichen werden mit solchen einer Datenbank, welche repräsentative Daten von Normalfahrzeugen und Normalaufhängungen enthält.

14. Prüfstand nach einem der Ansprüche 7 bis 11, dadurch gekennzeichnet, daß die auf das eine der Räder aufgebrachte Kraft mittels des beweglichen Elements (5, 6) erzeugt wird, auf dem das eine der Räder ruht, wobei das bewegliche Element durch ein Antriebselement bewegt oder durch ein mechanisches System beispielsweise auf der Grundlage einer gespannten Feder (9) oder eines pneumatischen Systems einem Stoß ausgesetzt werden kann.

15. Prüfstand nach einem der Ansprüche 7 bis 11, dadurch gekennzeichnet, daß die auf das eine der Räder ausgeübte Kraft, eine variable Belastung oder kurzer dynamischer Stoß, mittels des Motors des Fahrzeugs erzeugt wird, wobei das Hinterrad im Eingriff mit dem Getriebe ist.

16. Prüfstand nach einem der vorangehenden Ansprüche, dadurch gekennzeichnet, daß er ein Rechen- und Kontrollsystem (24) aufweist, das programmiert oder programmierbar ist , und nacheinander oder gleichzeitig eine oder mehrere der folgenden Funktionen ausführen kann:
- Die Verwaltung und regelmäßige Aktualisierung, beispielsweise durch Kopie der Datei, die auf einem Informationsspeicher vom Typ Diskette oder CD-ROM gespeichert ist, oder durch direkte Eingabe der auf dem bestimmten verwendeten Prüfstand durchgeführten Tests, um die mit dem Prüfstand selbst zusammenhängende systematische Verzerrung zu verringern, einer Datei, die gespeichert ist und deren Daten repräsentativ für Parameter sind, welche Normalaufhängungen, die an einer Gesamtheit von klassischen Fahrzeugen des Handels montiert sind, charakterisieren;
- Auswahl durch die Bedienungsperson, wobei diese aus einer vom Kontrollsystem vorgeschlagenen Liste von Fahrzeugen und Aufhängungen Modelle aussucht, welche analog den zu prüfenden sind,
- Steuerung von Stößen oder Belastungen, die auf das eine der Räder des Fahrzeugs ausgeübt werden, beispielsweise mittels einer Karte mit numerischer/analoger Kodierung, welche eine Anzahl von Eingängen aufweist, die mit den zu steuernden Effektoren kompatibel sind;
- in bestimmten Zeitintervallen Messen von Signalen, die von den Meßfühlern in Reaktion auf die ausgeübten Kräfte ausgesandt werden, beispielsweise mittels einer Digitalisierungskarte, wenn die Meßfühler ein kontinuierliches elektrisches Signal der Spannung senden, die repräsentativ für die Stärke der gemessenen Charakteristik der Bewegung ist, sowie deren Speicherung in einem temporären oder permantenten Speicher, wobei die Digitalisierungskarte eine Zahl von Eingängen/Aus-gängen aufweist, die mit der Zahl der Meßfühler kompatibel ist, die am Prüfstand oder dem untersuchten Fahrzeug befestigt sind, jedoch mindestens zwei, um gleichzeitig die zwei Aufhängungen zu prüfen;
- die Behandlung der gespeicherten Meßwerte der aufgebrachten Kraft und der Reaktion der Aufhängungen, um die von den Meßfühlern aufgenommenen Daten auf einige Parameter zu verringern, die als repräsentativ für den Zustand der Aufhängung angesehen werden;
- Bestimmen der Qualität der untersuchten Aufhängungen durch Anwendung von Kriterien des Vergleichs mit den Normalwerten, welche dem untersuchten Modell der Aufhängung und des Fahrzeugs entsprechen, und deren eventuelle Übereinstimmung mit Sicherheitskriterien;
- Speicherung der von einem bestimmten Fahrzeug bei einer Prüfung erhaltenen Ergebnisse, womit eine zeitliche Verfolgung der Aufhängungen ein und desselben Fahrzeugs oder der zeitlichen Entwicklung von Aufhängungen eines analogen Modells ermöglicht wird;
- Anzeige des Ergebnisses in einer für die Bedienungsperson verständlichen Form, beispielsweise durch Graphen, welche die Kurve der Reaktion der vorderen und hinteren Aufhängung auf eine Reihe von Belastungen überlagert auf Normal(Eich)Kurven wiedergibt, oder die Dämpfungszeit eines Stoßes im Verhältnis zur Zeit einer Normalaufhängung, die einem gleichen Stoß unterworfen wird, oder eine korrekte oder inkorrekte Vergleichsmontage jeder Aufhängung;
- und gegebenenfalls Ausdruck der Ergebnisse auf einem Träger vom Typ Papier.

## Claims

1. Test or monitoring bench for a motorcycle or two-wheeled vehicle comprising a first member (5, 6) on or in which there bears one of the wheels of the vehicle, so that an effort transmission relationship is established between said first member and said wheel, a second member (3) on which or in which there bears the second wheel so that an effort transmission relationship is established between said second member and said wheel, characterised in that it comprises a suspension monitoring system comprising:
- one or more means allowing the two-wheeled vehicle to be subjected to a force, to a variable effort or to an impulse, of a determined or determinable value;
- a means for measuring or determining at least one of the characteristics of movement of at least one of the points of the vehicle with respect to a reference, under the effect of the application of this variable effort, or impulse, or in response to this variable effort or impulse that is applied;
- a database for comparing the measurements taken on the tested vehicle with values coming from standard vehicles, the condition of which is deemed to be known, which values are characteristic either of suspensions in good condition, or on the other hand of suspensions that have certain faults of adjustment or efficiency.

2. Test bench according to Claim 1 characterised in that at least one of the two members in or on which one of the wheels rests is mounted so as to be mobile on a frame (1) in an arrangement permitting movement in a known direction and of a known type.

3. Test bench according to Claim 1 or Claim 2, characterised in that the variable effort or the impulse is applied to one of the wheels and is in the horizontal direction or oblique to the horizontal direction.

4. Test bench according to Claim 2, characterised in that the rear wheel rests on the mobile member and that said mobile member is constituted by a rough roller (5) mounted in rotation on the frame.

5. Test bench according to Claim 2, characterised in that the mobile member on which one of the wheels rests is constituted by a rough horizontal plate (6) mounted in horizontal rectilinear translation on the frame.

6. Test bench according to Claim 5, characterised in that the wheel of the vehicle is fixed to the mobile plate (6) via a shoe (16) attached to said plate.

7. Test bench according to any one of Claims 2 to 6, characterised in that efficiency of the suspensions is determined by directly reading off a graduated scale (18) facing which at least one cursor (19) is displaced, which cursor is itself displaced by an arm (17) fixed to the mobile member (5, 6) on which one of the wheels of the vehicle rests, and representing the maximum displacement of that mobile member in response to a known variable force or brief dynamic impulse, applied to at least one of the two wheels, in comparison with known displacements representative of standard suspensions, optionally indicated by reference to the graduated scale.

8. Test bench according to any one of Claims 1 to 6, characterised in that the efficiency of the suspensions is determined by measuring at least one of the characteristics of the vertical movement of the vehicle chassis at the level of its front suspension and/or its rear suspension, with respect to the position of the chassis at rest, in response to a known force applied to one of the wheels in comparison with a database of vertical displacement representative of standard vehicles and suspensions.

9. Test bench according to Claim 8, characterised in that that the measurement of at least one of the characteristics of the vertical movement of the chassis, at the front or the rear, is determined by using a wire (25) fixed by one of its ends to the vehicle chassis and by the other end to a return system (26), said wire (25) driving a means indicating at least the maximum amplitude in one direction or the other, the vertical displacement of the wire and therefore of the vehicle chassis.

10. Test bench according to Claim 9, characterised in that the indicator means is an angular encoder (27), said encoder being driven by the wire.

11. Test bench according to Claim 9, characterised in that the indicator means is constituted by a contact point mounted so as to slide in a guideway, in which two cursors are mounted in gentle friction on either side of the contact point, said cursors being displaceable facing a graduated scale by said contact point during the forward and backward travel of the latter, the position of the cursors relative to the graduated scale being an indicator of the maximum amplitude of the forward and backward travel of the contact point.

12. Test bench according to any one of Claims 1 to 6, characterised in that the efficiency of the suspensions is determined by direct measurement of the clearance of the front or rear suspensions, relative to their length at rest, in response to a known force applied to one of the wheels.

13. Test bench according to any one of Claims 1 to 6, characterised in that the efficiency of the suspensions is determined on the basis of information supplied by at least one of the following members: an accelerometric sensor, a speed sensor, a displacement or position sensor, an effort sensor, one or more of these being mounted on the vehicle chassis and/or on the suspensions and/or on the mobile member and supplying continuous information on the values of the measured characteristics of the movement of said chassis and/or said mobile member in response to a known force applied to one of the wheels, these data being compared with a database representing standard suspensions and vehicles.

14. Test bench according to any one of Claims 7 to 11, characterised in that the force applied to one of the wheels is created via the mobile member (5, 6) on which one of the wheels rests, it being possible for said mobile member to be moved by a motor unit or subjected to an impulse by a mechanical system, for example based on a spring (9) under tension or a pneumatic system.

15. Test bench according to any one of Claims 7 to 11, characterised in that the force applied to one of the wheels, a variable load or brief dynamic impulse, is created via the vehicle engine, the rear wheel being engaged with the gearbox.

16. Test bench according to any one of the preceding claims, characterised in that it comprises a calculation and monitoring system (24), programmed or programmable, making it possible to perform one or more of the following functions, successively or simultaneously:
- management and regular updating, for example by copying a file stored on a computer medium of the floppy disk or CD-ROM type or by directly inputting tests performed on the particular bench used, so as to reduce the systematic bias linked with the measurement bench itself, of a database stored in memory and representative of the characteristic parameters of the standard suspensions mounted on a set of conventional, commercially available vehicles;
- choice by the operator from a list of vehicles and suspensions, offered by the monitoring system, of models similar to those that have to be tested;
- control of impulses or loads applied to one of the wheels of the vehicle, for example via a digital-to-analogue encoding card comprising a number of inputs compatible with the effectors to be driven;
- measurement at given time intervals of signals emitted by the sensors in response to the forces applied, for example via a digitisation card if the sensors transmit a constant electrical signal voltage representing the intensity of the characteristic of the measured movement, together with their storage in temporary or permanent memory, said digitisation card comprising a number of inputs/outputs compatible with the number of sensors fixed to the test bench or the vehicle tested, but at least equal to two, in order to test both suspensions simultaneously;
- processing of the measurements stored in memory of the effort applied and the response of the suspensions with a view to reducing the data acquired by the sensors to a few parameters considered to be representative of the condition of the suspension;
- determination of the quality of the suspensions tested by application of comparison criteria with the standard values corresponding to the model of suspension and vehicle tested, and of their compliance, if any, with safety criteria;
- storage in memory of the results obtained by a given vehicle in a test, thus making it possible to monitor over time the suspensions of the same vehicle or the evolution over time of suspensions of a similar model;
- display of the result in a form understandable by the operator, for example by graphics representing the response curve of the front and rear suspensions to a series of loads, superimposed over standard curves, or the time for damping an impulse in proportion to the time of a standard suspension, subjected to the same impulse or a specimen of the correct or incorrect mounting of each suspension,
- and, optionally, printing of the results on a paper-type medium.
